# EUROPEAN PATENT APPLICATION

(11) **EP 4 391 543 A1**
(43) Date of publication of application: **26.06.2024**
(21) Application number: 22858815.8
(22) Date of filing: 22.08.2022
(51) Int. Cl.: H04N 19/70, H04N 19/30, H04N 19/44, H04N 21/2343, H04N 21/236, H04N 21/4402, H04N 21/434

(54) **IMAGE SIGNAL PROCESSING METHOD AND DEVICE**

(30) Priority: 20.08.2021 US 202163235177 P
(71) Applicant: LG Electronics Inc., Yeongdeungpo-gu Seoul 07336 (KR)
(72) Inventor: HENDRY, Hendry, Seoul 06772 (KR)
(74) Representative: Mooser, Sebastian Thomas
(86) International application number: PCT/KR2022/012547
(87) International publication number: WO 2023/022578

(57) **Abstract**

An image signal processing method and apparatus are provided. The image signal processing method performed by a receiving apparatus may comprise acquiring one or more fragmentation units from an image signal, extracting one or more bytes of a network abstraction layer (NAL) unit for a current picture from the acquired fragmentation unit, and decoding the current picture based on the extracted NAL unit. The fragmentation unit may comprise first header information indicating whether the fragmentation unit includes a last byte of a last video coding layer (VCL) NAL unit of the current block, first header information of the acquired fragmentation unit may have a first value, based on the acquired fragmentation unit including a byte preceding the last byte of the last VCL NAL unit, and the first header information of the acquired fragmentation unit may have a second value, based on the acquired fragmentation unit including the last byte of the last VCL NAL unit.

## Description

### Technical Field

The present disclosure relates to an image signal processing method and, more particularly, to a method and apparatus for processing an RTP packet.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image signal processing method and apparatus with improved processing efficiency.

An object of the present disclosure is to provide an image signal processing method and apparatus based on P-bit header information of an RTP packet.

An object of the present disclosure is to provide a method of transmitting an image signal generated by an image signal processing method and apparatus of the present disclosure.

The technical problems solved by the present disclosure are not limited to the above technical problems and other technical problems which are not described herein will become apparent to those skilled in the art from the following description.

### Technical Solution

An image signal processing method performed by a receiving apparatus according to an aspect of the present disclosure may comprise acquiring one or more fragmentation units from an image signal, extracting one or more bytes of a network abstraction layer (NAL) unit for a current picture from the acquired fragmentation unit, and decoding the current picture based on the extracted NAL unit. The fragmentation unit may comprise first header information indicating whether the fragmentation unit includes a last byte of a last video coding layer (VCL) NAL unit of the current block, first header information of the acquired fragmentation unit may have a first value, based on the acquired fragmentation unit including a byte preceding the last byte of the last VCL NAL unit, and the first header information of the acquired fragmentation unit may have a second value, based on the acquired fragmentation unit including the last byte of the last VCL NAL unit.

An image signal processing method performed by a transmission apparatus according to another aspect of the present disclosure may comprise encoding a current picture to generate a network abstraction layer (NAL) unit, packetizing the generated NAL unit to generate one or more fragmentation units for the current picture, and generating an image signal for the current picture based on the generated fragmentation unit. The fragmentation unit may comprise first header information indicating whether the fragmentation unit includes a last byte of a last video coding layer (VCL) NAL unit of the current block, first header information of the generated fragmentation unit may have a first value, based on the generated fragmentation unit including a byte preceding the last byte of the last VCL NAL unit, and the first header information of the generated fragmentation unit may have a second value, based on the generated fragmentation unit including the last byte of the last VCL NAL unit.

A receiving apparatus according to another aspect of the present disclosure may comprise a receiving unit configured to receive an image signal, a depacketization unit configured to extract one or more bytes of a network abstraction layer (NAL) unit for a current picture from one or more fragmentation units included in the image signal, and a decoding unit configured to decode the current picture based on the extracted NAL unit. The fragmentation unit may comprise first header information indicating whether the fragmentation unit includes a last byte of a last video coding layer (VCL) NAL unit of the current block, first header information of the acquired fragmentation unit may have a first value, based on the acquired fragmentation unit including a byte preceding the last byte of the last VCL NAL unit, and the first header information of the acquired fragmentation unit may have a second value, based on the acquired fragmentation unit including the last byte of the last VCL NAL unit.

An image signal transmission method according to another aspect of the present disclosure may transmit an image signal generated by the image signal processing method or transmission apparatus of the present disclosure via a network.

The features briefly summarized above with respect to the present disclosure are merely exemplary aspects of the detailed description below of the present disclosure, and do not limit the scope of the present disclosure.

### Advantageous Effects

According to the present disclosure, it is possible to provide an image signal processing method and apparatus with improved encoding/decoding efficiency.

According to the present disclosure, it is possible to provide an image signal processing method and apparatus based on RTP.

According to the present disclosure, it is possible to provide a method of transmitting an image signal generated by the image signal processing method and apparatus of the present disclosure.

It will be appreciated by persons skilled in the art that that the effects that can be achieved through the present disclosure are not limited to what has been particularly described hereinabove and other advantages of the present disclosure will be more clearly understood from the detailed description.

### Description of Drawings

FIG. 1 is a view schematically showing an image signal processing system to which an embodiment of the present disclosure is applicable.
FIG. 2 is a view schematically showing an image encoding apparatus to which an embodiment of the present disclosure is applicable.
FIG. 3 is a view schematically showing an image decoding apparatus to which an embodiment of the present disclosure is applicable.
FIG. 4 is a flowchart schematically illustrating an image decoding procedure to which an embodiment of the present disclosure is applicable.
FIG. 5 is a flowchart schematically illustrating an image encoding procedure to which an embodiment of the present disclosure is applicable.
FIG. 6 is a view illustrating an example of a layer structure for a coded image/video.
FIG. 7 is a view illustrating an RTP packet structure to which an embodiment of the present disclosure is applicable.
FIG. 8 is a view illustrating an example of an RTP header format.
FIG. 9 is a view illustrating an example of a single NAL unit packet structure.
FIG. 10 is a view illustrating an example of an aggregation packet (AP) structure.
FIG. 11 is a view illustrating an example of the structure of a first aggregation unit in an aggregation packet (AP).
FIG. 12 is a view illustrating an example of the structure of the first and subsequent aggregation units in an aggregation packet (AP).
FIG. 13 is a view illustrating an example of a fragmentation unit (FU) structure.
FIG. 14 is a view illustrating an example of a FU header structure.
FIGS. 15a and 15b are views illustrating cases where RTP packet loss occurs.
FIG. 16 is a flowchart illustrating a depacketization process of a fragmentation unit (FU) according to an embodiment of the present disclosure.
FIGS. 17a and 17b are views illustrating cases where RTP packet loss occurs.
FIG. 18 is a flowchart illustrating a depacketization process of a fragmentation unit (FU) according to an embodiment of the present disclosure.
FIG. 19 is a flowchart showing a method of processing an image signal by a transmission apparatus according to an embodiment of the present disclosure.
FIG. 20 is a flowchart showing a method of processing an image signal by a receiving apparatus according to an embodiment of the present disclosure.
FIG. 21 is a view showing a content streaming system, to which an embodiment of the present disclosure is applicable.

### Mode for Invention

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

### Overview of image processing system

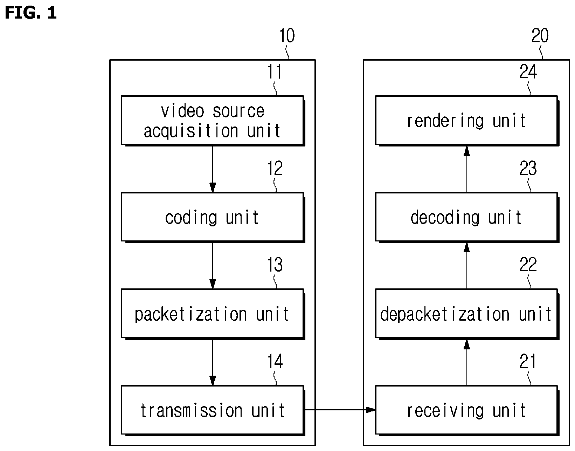

FIG. 1 is a view schematically illustrating an image signal processing system to which an embodiment of the present disclosure is applicable.

The image signal processing system according to an embodiment may include a transmission apparatus 10 and a receiving apparatus 20. The transmission apparatus 10 may packetize and transfer encoded video/image data (or information) to the receiving apparatus 20 via a digital storage medium or network.

The transmission apparatus 10 according to an embodiment may include a video source acquisition unit 11, a coding unit 12, a packetization unit 13, and a transmission unit 14. The receiving apparatus 20 according to an embodiment may include a receiving unit 21, a depacketization unit 22, a decoding unit 23, and a rendering unit 24. The encoding unit 12 may be referred to as an image encoding device or an encoder, and the decoding unit 23 may be referred to as an image decoding device or decoder.

The video source acquisition unit 11 may acquire video/image data through the capture, synthesis or creation process of a video/image. In addition, the video source acquisition unit 11 may acquire video/image data from the outside through a digital storage medium or network. In this case, the video source acquisition unit 11 performs an input/output interface function. The video source acquisition unit 11 may include a memory for storing the video/image data according to an embodiment.

The encoding unit 12 may encode the acquired video/image data. The encoding unit 12 may perform a series of procedures such as prediction, transform, and quantization for compression and encoding efficiency. The encoded video/image data may have a bitstream form including NAL units defined in the video codec standard, such as H.266.

The packetization unit 13 may packetize the encoded video/image data to generate an image signal. For example, the packetization unit 13 may packetize the NAL units included in the bitstream according to a predetermined transmission format (e.g., RTP (Real-time Transport Protocol), TS (Transport Stream), etc.) to generate the image signal.

The transmission unit 14 may transmit the generated image information to the receiving unit 21 of the receiving apparatus 20 through a digital storage medium or a network in the form of a file or streaming. The digital storage medium may include various storage mediums such as USB, SD, CD, DVD, Blu-ray, HDD, SSD, and the like. The transmission unit 14 may transmit the image signal to the receiving unit 21 of the receiving apparatus 20 through a media aware network element (MANE). Meanwhile, in some embodiments, the transmission unit 14 may be implemented integrally with the packetization unit 13, unlike that shown in FIG. 1.

The depacketization unit 22 may depacketize packets included in the received image signal to acquire video/image data. For example, the depacketization unit 22 may depacketize the packets included in the image signal to extract NAL units and transmit the extracted NAL units to the decoding unit 23. Meanwhile, the depacketization unit 22 may be implemented integrally with the receiving unit 21, unlike that shown in FIG. 1.

The decoding unit 23 may decode the video/image data based on the extracted NAL units. To this end, the decoding unit 23 may perform a series of procedures such as dequantization, inverse transform, prediction, etc. corresponding to operation of the encoding unit 12.

The rendering unit 24 may render the decoded video/image data. The rendered video/image data may be output through an output interface (e.g., display).

### Overview of image encoding apparatus

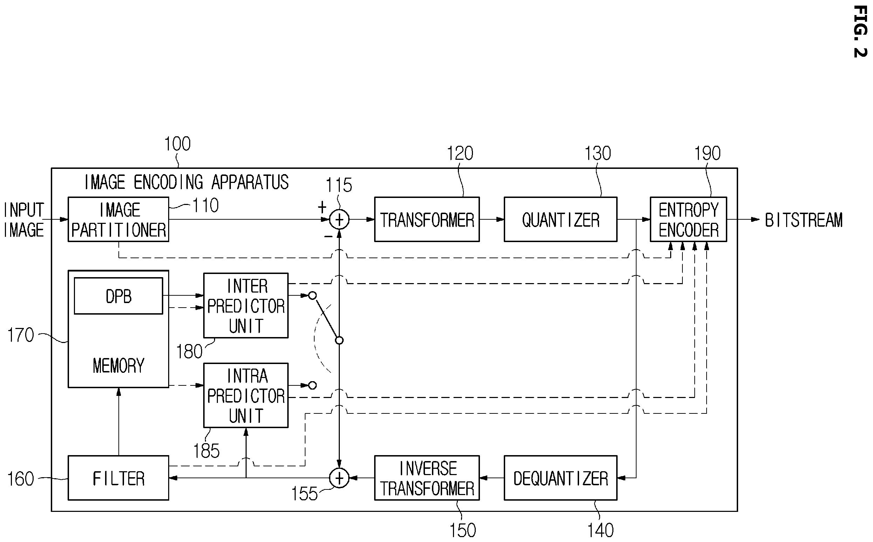

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be obtained by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth obtained by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (coICU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform obtained based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

### Overview of image decoding apparatus

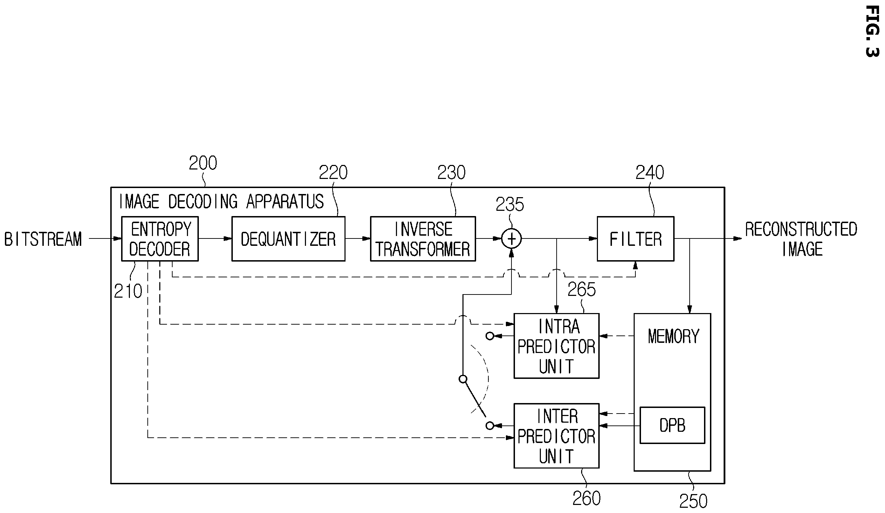

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 250 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be obtained by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter prediction unit 260, and the intra prediction unit 265 of the image decoding apparatus 200.

### Image/Video Coding Procedure General

In image/video coding, pictures constituting the image/video may be encoded/decoded according to a series of decoding orders. The picture order corresponding to the output order of the decoded picture may be set differently from the decoding order, and based on this, not only forward prediction but also backward prediction may be performed during inter prediction.

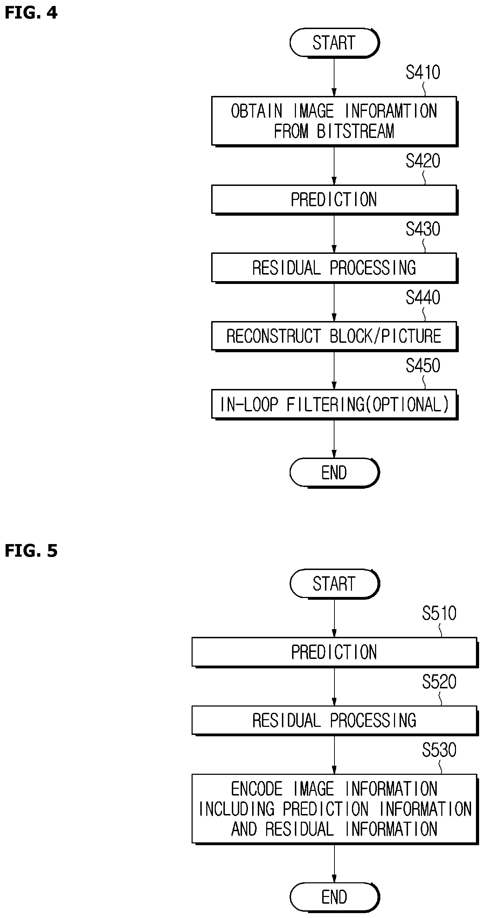

FIG. 4 is a flowchart schematically illustrating an image decoding procedure to which an embodiment of the present disclosure is applicable.

Each procedure shown in FIG. 4 may be performed by the image decoding apparatus of FIG. 3. For example, in FIG. 4, step S410 may be performed in the entropy decoder 210, step S420 may be performed in the prediction unit including the intra prediction unit 265 and the inter prediction unit 260, step S430 may be performed in the residual processor including the dequantizer 220 and the inverse transformer 230, step S440 may be performed in the adder 235, and step S450 may be performed in the filter 240. Step S410 may include an information decoding procedure described herein, step S420 may include an inter/intra prediction procedure described herein, step S430 may include a residual processing procedure described herein, and step S440 may include a block/picture reconstruction procedure described herein, and step S450 may include an in-loop filtering procedure described herein.

Referring to FIG. 4, the picture decoding procedure may schematically include a procedure for acquiring image/video information (through decoding) from a bitstream (S410), a picture reconstruction procedure (S420 to S440), and an in-loop filtering procedure for a reconstructed picture (S450). The picture reconstruction procedure may be performed based on prediction samples and residual samples acquired through the inter/intra prediction (S420) and residual processing (S430, dequantization and inverse transform of quantized transform coefficients) processes described herein. A modified reconstructed picture may be generated through an in-loop filtering procedure for the reconstructed picture generated through the picture reconstruction procedure, the modified reconstructed picture may be output as a decoded picture, and may be stored in the decoded picture buffer or memory 250 of the decoding apparatus and used as a reference picture in the inter prediction procedure when decoding a picture later. In some cases, the in-loop filtering procedure may be omitted, in which case the reconstructed picture may be output as a decoded picture, and may also be stored in the decoded picture buffer or memory 250 of the decoding apparatus to be used as a reference picture in the inter prediction procedure when decoding a picture later. The in-loop filtering procedure (S450) may include a deblocking filtering procedure, a sample adaptive offset (SAO) procedure, an adaptive loop filter (ALF) procedure, and/or a bi-lateral filter procedure, etc., as described above and some or all thereof may be omitted. In addition, one or some of the deblocking filtering procedure, sample adaptive offset (SAO) procedure, adaptive loop filter (ALF) procedure, and bi-lateral filter procedure may be applied sequentially, or all may be applied sequentially. For example, the SAO procedure may be performed after a deblocking filtering procedure is applied to the reconstructed picture. Alternatively, for example, an ALF procedure may be performed after a deblocking filtering procedure is applied to the reconstructed picture. This may also be performed in the encoding apparatus as well.

FIG. 5 is a flowchart schematically illustrating an image encoding procedure to which an embodiment of the present disclosure is applicable.

Each procedure shown in FIG. 5 may be performed by the image encoding apparatus of FIG. 2. For example, step S510 may be performed in the prediction unit including the intra prediction unit 185 or the inter prediction unit 180, step S520 may be performed in the residual processor including the transform unit 120 and/or the quantization unit 130, and step S530 may be performed in the entropy encoding unit 180. Step S510 may include an inter/intra prediction procedure described herein, step S520 may include a residual processing procedure described herein, and step S530 may include an information encoding procedure described herein.

Referring to FIG. 5, the picture encoding procedure may schematically include not only a procedure for encoding and outputting information for picture reconstruction (e.g., prediction information, residual information, partitioning information, etc.) in the form of a bitstream but also a procedure for generating a reconstructed picture for a current picture and a procedure (optional) for applying in-loop filtering to a reconstructed picture, as described with reference to FIG. 2. The encoding apparatus may derive (modified) residual samples from a quantized transform coefficient through the dequantizer 140 and the inverse transformer 150, and generate the reconstructed picture based on the prediction samples which are output of step S510 and the (modified) residual samples. The reconstructed picture generated in this way may be equal to the reconstructed picture generated in the decoding apparatus. The modified reconstructed picture may be generated through the in-loop filtering procedure for the reconstructed picture, may be stored in the decoded picture buffer or memory 170, and may be used as a reference picture in the inter prediction procedure when encoding the picture later, similarly to the decoding apparatus. As described above, in some cases, some or all of the in-loop filtering procedure may be omitted. When the in-loop filtering procedure is performed, (in-loop) filtering related information (parameter) may be encoded in the entropy encoder 190 and output in the form of a bitstream, and the decoding apparatus may perform the in-loop filtering procedure using the same method as the encoding apparatus based on the filtering related information.

Through such an in-loop filtering procedure, noise occurring during image/video coding, such as blocking artifact and ringing artifact, may be reduced and subjective/objective visual quality may be improved. In addition, by performing the in-loop filtering procedure in both the encoding apparatus and the decoding apparatus, the encoding apparatus and the decoding apparatus may derive the same prediction result, picture coding reliability may be increased and the amount of data to be transmitted for picture coding may be reduced.

As described above, the picture reconstruction procedure may be performed not only in the decoding apparatus but also in the encoding apparatus. A reconstructed block may be generated based on intra prediction/inter prediction in units of blocks, and a reconstructed picture including reconstructed blocks may be generated. When a current picture/slice/tile group is an I picture/slice/tile group, blocks included in the current picture/slice/tile group may be reconstructed based on only intra prediction. Meanwhile, when the current picture/slice/tile group is a P or B picture/slice/tile group, blocks included in the current picture/slice/tile group may be reconstructed based on intra prediction or inter prediction. In this case, inter prediction may be applied to some blocks in the current picture/slice/tile group and intra prediction may be applied to the remaining blocks. The color component of the picture may include a luma component and a chroma component and the methods and embodiments of the present disclosure are applicable to the luma component and the chroma component unless explicitly limited in the present disclosure.

### Example of Coding Layer and Structure

A coded video/image according to the present disclosure may be processed, for example, according to a coding layer and structure which will be described below.

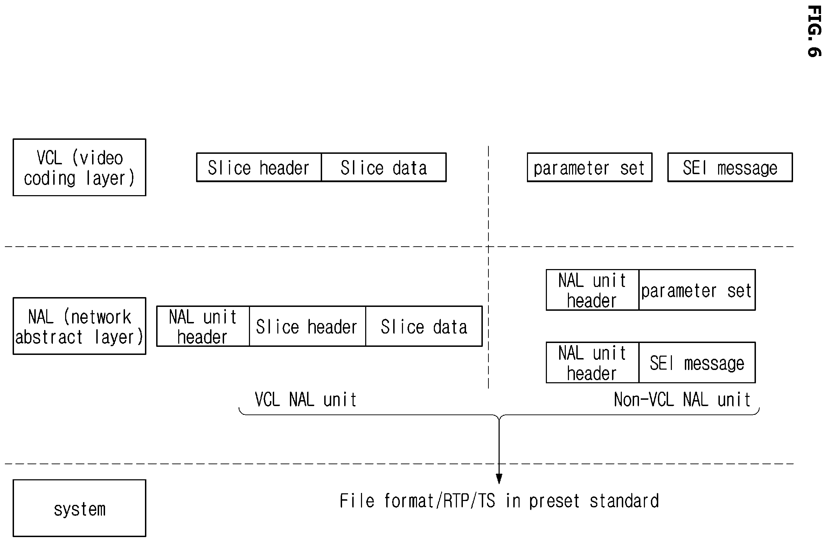

FIG. 6 is a view illustrating an example of a layer structure for a coded image/video.

The coded image/video may be classified into a video coding layer (VCL) for an image/video decoding process and handling itself, a lower system for transmitting and storing encoded information, and a network abstraction layer (NAL) present between the VCL and the lower system and responsible for a network adaptation function.

In the VCL, VCL data including compressed image data (slice data) may be generated or a supplemental enhancement information (SEI) message additionally required for a decoding process of an image or a parameter set including information such as a picture parameter set (PPS), a sequence parameter set (SPS) or a video parameter set (VPS) may be generated.

In the NAL, header information (NAL unit header) may be added to a raw byte sequence payload (RBSP) generated in the VCL to generate a NAL unit. In this case, the RBSP refers to slice data, a parameter set, an SEI message generated in the VCL. The NAL unit header may include NAL unit type information specified according to RBSP data included in a corresponding NAL unit.

As shown in FIG. 6, the NAL unit may be classified into a VCL NAL unit and a non-VCL NAL unit according to the type of the RBSP generated in the VCL. The VCL NAL unit may mean a NAL unit including information on an image (slice data), and the Non-VCL NAL unit may mean a NAL unit including information (parameter set or SEI message) required to decode an image.

The VCL NAL unit and the Non-VCL NAL unit may be attached with header information and transmitted through a network according to the data standard of the lower system. For example, the NAL unit may be modified into a data format of a predetermined standard, such as H.266/WC file format, RTP (Real-time Transport Protocol) or TS (Transport Stream), and transmitted through various networks.

As described above, in the NAL unit, a NAL unit type may be specified according to the RBSP data structure included in the corresponding NAL unit, and information on the NAL unit type may be stored in a NAL unit header and signaled. For example, this may be largely classified into a VCL NAL unit type and a non-VCL NAL unit type depending on whether the NAL unit includes information on an image (slice data). The VCL NAL unit type may be classified according to the property and type of the picture included in the VCL NAL unit, and the Non-VCL NAL unit type may be classified according to the type of a parameter set.

An example of the NAL unit type specified according to the type of the parameter set included in the Non-VCL NAL unit type is described as follows.
- DCI (Decoding capability information) NAL unit type (NUT): Type for NAL unit including DCI
- VPS (Video Parameter Set) NUT: Type for NAL unit including VPS
- SPS (Sequence Parameter Set) NUT: Type for NAL unit including SPS
- PPS (Picture Parameter Set) NUT: Type for NAL unit including PPS
- APS (Adaptation Parameter Set) NUT: Type for NAL unit including APS
- PH (Picture header) NUT: Type for NAL unit including picture header

The above-described NAL unit types may have syntax information for a NAL unit type, and the syntax information may be stored in a NAL unit header and signaled. For example, the syntax information may be nal_unit_type, and the NAL unit types may be specified using nal_unit_type values.

Meanwhile, one picture may include multiple slices, and one slice may include a slice header and slice data. In this case, one picture header may be further added for multiple slices (slice header and slice data set) within one picture. The picture header (picture header syntax) may include information/parameters commonly applicable to the picture. The slice header (slice header syntax) may include information/parameters commonly applicable to the slice. The APS (APS syntax) or PPS (PPS syntax) may include information/parameters commonly applicable to one or more slices or pictures. The SPS (SPS syntax) may include information/parameters commonly applicable to one or more sequences. The VPS (VPS syntax) may information/parameters commonly applicable to multiple layers. The DCI may include information/parameters related to decoding capability.

In the present disclosure, high level syntax (HLS) may include at least one of the APS syntax, PPS syntax, SPS syntax, VPS syntax, DCI syntax, picture header syntax, or slice header syntax. Additionally, in the present disclosure, low level syntax (LLS) may include, for example, slice data syntax, CTU syntax, coding unit syntax, transform unit syntax, etc.

Meanwhile, in the present disclosure, image/video information encoded and signaled from the encoding apparatus to the decoding apparatus in the form of a bitstream may include not only information related to partitioning within a picture, intra/inter prediction information, residual information, in-loop filtering information but also information on the slice header, information on the picture header, information on the APS, information on the PPS, information on the SPS, information on the VPS and/or information on the DCI. In addition, the image/video information may further include general constraint information and/or information on a NAL unit header.

### RTP (Real-time Transport Protocol) Packet Structure

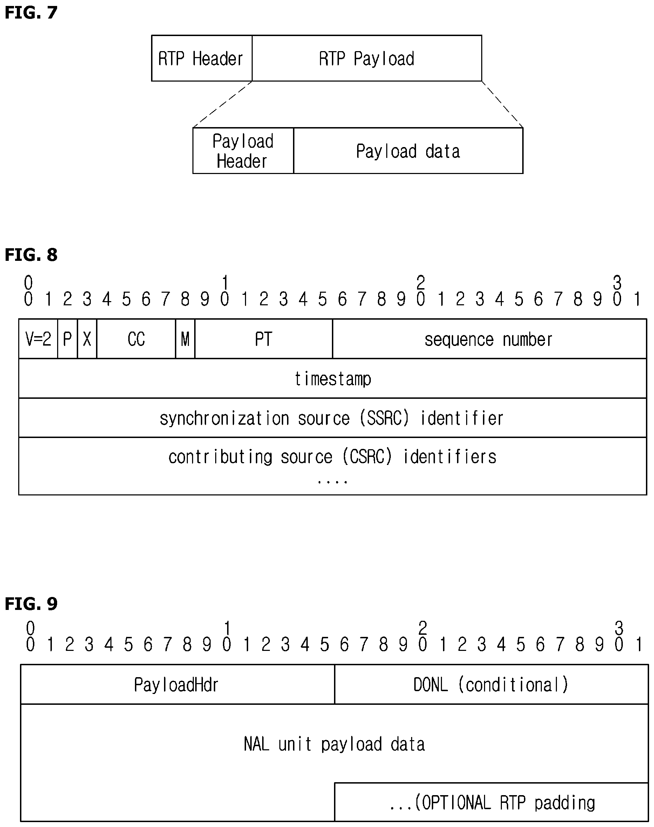

According to embodiments of the present disclosure, an image signal may include Real-time Transport Protocol (RTP) packets generated according to the RTP. The RTP refers to a protocol for packetizing data such as video/images and audio and transmitting it in real time over a network. An example of an RTP packet structure is shown in FIG. 7.

FIG. 7 is a view illustrating an RTP packet structure to which an embodiment of the present disclosure is applicable.

Referring to FIG. 7, an RTP packet may include an RTP header and RTP payload. The RTP header may include predetermined basic header information and extended header information of the RTP payload. The RTP payload includes coded video/image data and may be composed of a payload header and payload data. The payload header may include the same information (e.g., F, Z, LayerID, Type, and TID) as the NAL unit header, and the payload data may include the payload data of the NAL unit.

The format of the RTP header may be specified in a standard document, such as RFC 3550. The RTP payload format may use the fields of the RTP header in a manner consistent with the standard document. The RTP payload (and settings for some RTP header bits) for aggregation packets (APs) and fragmentation units (FUs) may be specified within the standard document.

FIG. 8 is a view illustrating an example of an RTP header format.

Referring to FIG. 8, RTP header information may be set as follows according to the RTP payload format.
- Marker bit (M): Set for the last packet in transmission order among each set of packets containing NAL units of one access unit. This is consistent with the use of the M-bit in the video format to allow efficient playout buffer handling. In one example, the size of the M field may be 1 bit.
- Payload type (PT): Indicates the type of RTP payload. Assignment of the payload type shall be done through the profile used or in a dynamic manner. In one example, the size of the PT field may be 7 bits.
- Sequence number (SN): Indicates the sequence number of the RTP packet. Set and used according to the standard document (e.g., RFC3550). In one example, the size of the SN field may be 16 bits.
- Timestamp: Indicates time information associated with the RTP packet. The RTP timestamp is set to the sampling timestamp of the content. A 90-kHz clock rate must be used. If the NAL unit does not have its own timing properties (e.g., parameter set and SEI NAL units), the RTP timestamp is set to the RTP timestamp of coded pictures of the access unit containing the NAL unit (according to Section 7.4.2.4 of the WC standard). A receiver shall use the RTP timestamp for a display process, even if a bitstream includes picture timing SEI messages or decoding unit information SEI messages (specified in the WC standard). For reference, if picture timing SEI messages are present, an RTP sender needs to verify whether the RTP timestamps match the timing information carried in the picture timing SEI messages. In one example, the size of the timestamp field may be 32 bits.
- Synchronization Source (SSRC): Used to identify the source of RTP packets. A single SSRC is used for all parts of a single bitstream. In one example, the size of the SSRC field may be 32 bits.

The first two bytes of the payload of an RTP packet may be referred to as a payload header. The payload header may be composed of the same field (e.g., F, Z, LayerID, Type, and TID) as the NAL unit header specified in the standard document, regardless of the type of payload structure. The TID value may indicate the relative importance of the RTP packet. This may be because, for example, NAL units belonging to upper temporal sublayers are not used for decoding of lower temporal sublayers. A lower TID value may indicate higher importance. More important NAL units may be better protected from transmission loss compared to relatively less important NAL units. For reference, in hierarchical coding there may be similar things for Layer_id, but in multi-view coding this may not be the case. However, for serious layer pruning, interpretation of the VPS may be required. In the future, a stateful interpretation of LayerID may be needed for the stateless interpretation of TID.

Three different types of RTP packet payload structures may be defined. The receiver may identify the type of RTP packet payload through the Type field in the payload header. The three different payload structures are as follows.
- Single NAL unit packet: Contains a single NAL unit in the payload. The NAL unit header of the NAL unit may also serve as a payload header.
- Aggregation Packet (AP): Contains more than one NAL unit in one access unit.
- Fragmentation Unit (FU): Contains a subset of a single NAL unit.

FIG. 9 is a view illustrating an example of a single NAL unit packet structure.

Referring to FIG. 9, a single NAL unit packet may include one NAL unit. The single NAL unit packet may include a payload header (denoted by PayloadHdr), a conditional DONL field (network byte order), and NAL unit payload data (NAL units excluding the NAL unit header).

The DONL (Decoding Order Number Lower) field, if present, may indicate the value of the 16 least significant bits (LSBs) of the decoding order number of the NAL unit. In one example, the size of the DONL field may be 16 bits.

If the value of a parameter sprop-max-don-diff is greater than 0, the DONL field shall be present, and a variable DON for the included NAL unit may be derived to the same value as the value of the DONL field. Otherwise (the value of sprop-max-don-diff is 0), the DONL field shall not be present. Here, sprop-max-don-diff may indicate a maximum difference between decoding order number (i.e., AbsDon) values of any two NAL units naluA and naluB (naluA follows naluB in decoding order and precedes naluB in transmission order). If there is no naluB that precedes naluA in decoding order but follows naluA in transmission order (i.e., when the transmission order of NAL units is the same as the decoding order), the value of sprop-max-don-diff shall be 0. In one example, the value of sprop-max-don-diff shall be an integer ranging from 0 to 32767. If sprop-max-don-diff is not present, the value of sprop-max-don-diff may be inferred to be 0.

Aggregation Packets (APs) may reduce packetization overhead for small NAL units, such as most non-VCL NAL units that are only a few octets in size. An aggregation packet (AP) may aggregate NAL units of one access unit. Each NAL unit carried within an aggregation packet (AP) may be encapsulated in an aggregation unit. NAL units aggregated within one aggregation packet (AP) may be included in the NAL unit decoding order.

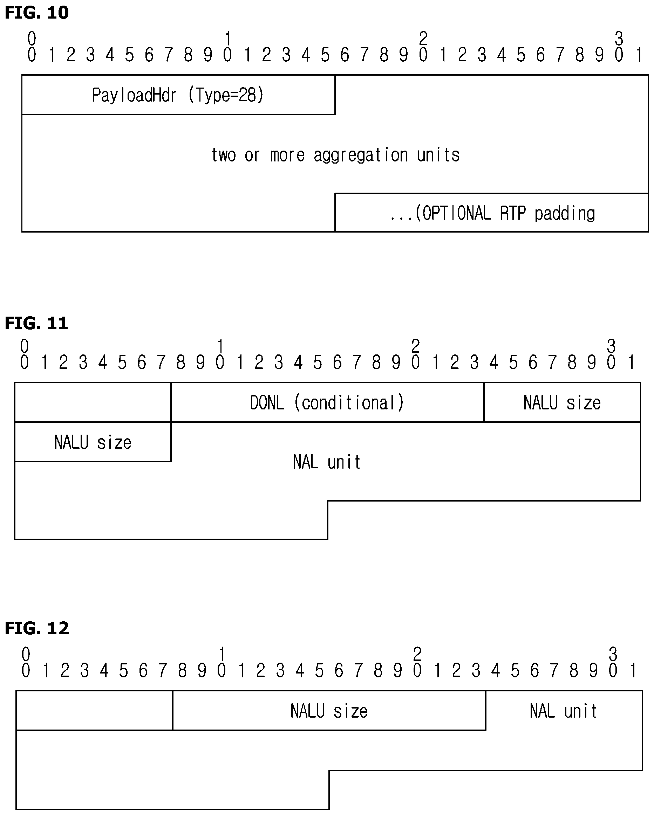

FIG. 10 is a view illustrating an example of an aggregation packet (AP) structure.

Referring to FIG. 10, an aggregation packet (AP) may be composed of a payload header (denoted by PayloadHdr) and two or more aggregation units that follows.

Fields in the payload header of the aggregation packet (AP) may be set as follows. The F-bit shall be set to 0 if the F-bit of each aggregated NAL unit is equal to 0. Otherwise, the F-bit shall be set to 1. The Type field shall be set to 28. The value of LayerId shall be equal to a minimum value of LayerId of all aggregated NAL units. The value of TID shall be a minimum value of the TID of all aggregated NAL units. For reference, all VCL NAL units in an aggregation packet (AP) may have the same TID value because they belong to the same access unit. The aggregation packet (AP) may further include non-VCL NAL units having a TID value different from the TID value of the VCL NAL units in the aggregation packet (AP). In other words, within an aggregation packet (AP), VCL NAL units and non-VCL NAL units may have different TID values.

An aggregation packet (AP) carries at least two aggregation units and may carry the required number of aggregation units. However, the total amount of data in the aggregation packet (AP) shall fit into the IP packet, and its size shall be chosen so that the resulting IP packet is smaller than the size of the Maximum Transfer Unit (MTU) to avoid IP layer fragmentation. The Aggregation Packet (AP) shall not contain fragmentation Units (FUs) specified in the standard document. Aggregation packets (APs) shall not overlap. In other words, one aggregation packet (AP) cannot contain another aggregation packet (AP).

FIG. 11 is a view illustrating an example of the structure of a first aggregation unit in an aggregation packet (AP).

Referring to FIG. 11, the first aggregation unit in the aggregation packet (AP) may include a conditional DONL field (network byte order), a NALU size field indicating a NAL unit size, and a NAL unit (including a NAL unit header).

The DONL field, if present, may indicate the value of the 16 least significant bits of the decoding order number of the aggregated NAL unit. If the value of a parameter sprop-max-don-diff is greater than 0, the DONL field shall be present in the first aggregation unit in the aggregation packet (AP), and a variable DON for the aggregated NAL unit may be derived to the same value as the value of the DONL field. In addition, the variable DON for an aggregation unit that is not the first aggregation unit in the AP aggregated NAL unit may be derived to a value (e.g., DON plus 1 modulo 65536) obtained by performing a modulo operation using a predetermined value (e.g., 65536) as a modulas on the variable DON of the preceding aggregated NAL unit in the same aggregation packet (AP) plus 1. Otherwise (the value of sprop-max-don-diff is 0), the DONL field shall not be present in the first aggregation unit of the aggregation packet (AP).

The NALU size field may be unsigned size information indicating the size of the NAL unit in bytes. The two octets of the NALU size field are excluded from the corresponding NAL unit size, but the NAL unit header may be included in the corresponding NAL unit size. In one example, the size of the NALU size field may be 16 bits.

FIG. 12 is a view illustrating an example of the structure of the first and subsequent aggregation units in an aggregation packet (AP).

Referring to FIG. 12, an aggregation unit other than the first aggregation unit in an aggregation packet (AP) may include a NALU size field indicating a NAL unit size and a NAL unit (including a NAL unit header).

The NALU size field may be 16-bit unsigned size information indicating the size of the NAL unit in bytes (two octets of the size information are excluded from the corresponding NAL unit size, but the NAL unit header is included).

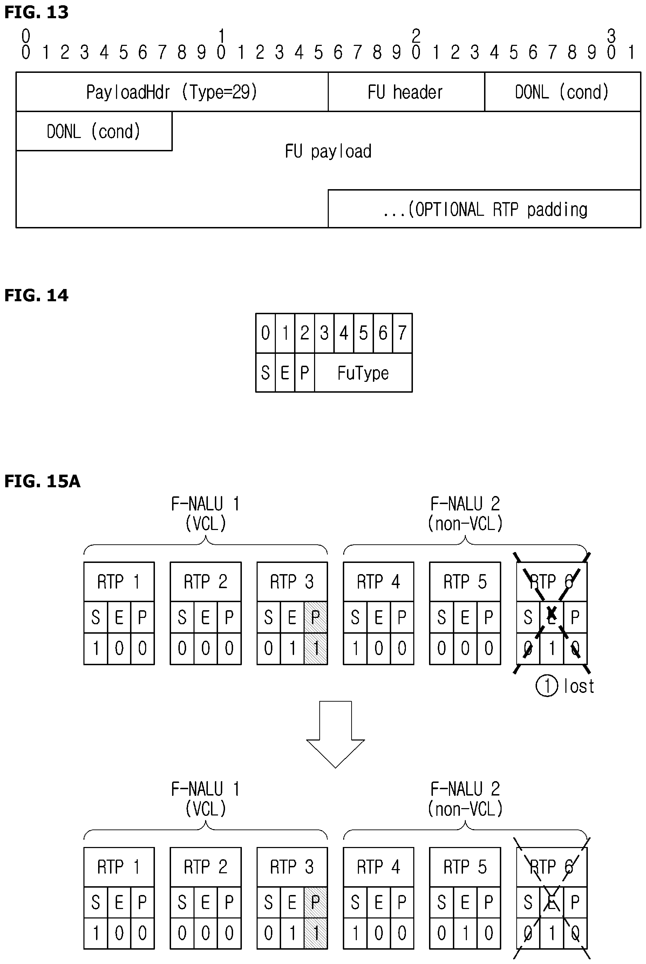

FIG. 13 is a view illustrating an example of a fragmentation unit (FU) structure.

Fragmentation Units (FUs) are introduced to enable fragmentation of a single NAL unit into multiple RTP packets, possibly without the intervention of the WC encoder. A fragment of a NAL unit may consist of an integer number of consecutive octets of the corresponding NAL unit. Fragments of the same NAL unit shall be transmitted in consecutive order with ascending RTP sequence numbering (no other RTP packets within the same RTP stream are transmitted between the first and last fragments).

If a NAL unit is fragmented and transferred within a fragmentation unit (FU), the NAL unit may be referred to as a fragmented NAL unit. Aggregation packets (APs) shall not be fragmented. The fragmentation units (FUs) shall not overlap. In other words, one fragmentation unit (FU) cannot contain a subset of other fragmentation units (FUs).

The RTP timestamp of the RTP packet carrying the fragmentation unit (FU) may be set to the NALU-time of the fragmented NAL unit.

The fragmentation unit (FU) may be composed of a payload header (denoted by PayloadHdr), a one-octet FU header, a conditional DONL field (network byte order), and a FU payload, as shown in FIG. 13. In one example, the size of the DONL field may be 16 bits.

Fields in the payload header may be set as follows. The Type field shall be 29. The F, LayerID, and TID fields shall be the same as the F, LayerID, and TID fields of the fragmented NAL unit, respectively.

FIG. 14 is a view illustrating an example of a FU header structure.

Referring to FIG. 14, the FU header may be composed of an S-bit, E-bit, R-bit, and FuType fields. The semantics of the FU header fields are as follows.
- S: When it is set to 1, the S-bit indicates the start of a fragmented NAL unit. In other words, the first byte of the FU payload may be the first byte of the payload of the fragmented NAL unit. If the FU payload is not the start of the fragmented NAL unit payload, the S-bit shall be set to 0. In one example, the size of the S-bit field may be 1 bit.
- E: When it is set to 1, the E-bit indicates the end of the fragmented NAL unit. In other words, the last byte of the FU payload may be the last byte of the payload of the fragmented NAL unit. If the FU payload is not the last fragment of the fragmented NAL unit payload, the E-bit shall be set to 0. In one example, the size of the E-bit field may be 1 bit.
- P: When it is set to 1, the P-bit indicates the last NAL unit of the coded picture. In other words, the last byte of the FU payload may be the last byte of the coded picture. If the FU payload is not the last fragment of the coded picture, the P-bit shall be set to 0. In one example, the size of the P-bit field may be 1 bit.
- FuType: The FuType field shall be the same as the field type of the fragmented NAL unit. In one example, the size of the FuType field may be 5 bits.
- DONL field: If present, indicates the value of the 16 least significant bits of the decoding order number of the fragmented NAL unit.

If the value of the parameter sprop_max-don_diff is greater than 0 and the value of the S-bit field is 1, the DONL field shall be present in a fragmentation unit (FU). In this case, the variable DON for the fragmented NAL unit may be derived to the same value as the value of the DONL field. Otherwise (the value of sprop-max-don-diff is 0 or the S-bit is 0), the DONL field shall not be present within a fragmentation unit (FU).

Non-fragmented NAL units shall not be transmitted within one fragmentation unit (FU). In other words, the S-bit and E-bit shall not both be set to 1 within the same FU header.

Since the FU payload consists of payload fragments of a fragmented NAL unit, when FU payloads of consecutive fragmentation units (FUs) starting with a fragmentation unit (FU) with an S-bit of 1 and ending with a fragmentation unit (FU) with an E-bit of 1 are sequentially connected, the payload of the fragmented NAL unit may be reconstructed. The NAL unit header of the fragmented NAL unit is not included in the FU payload, and the F, LayerId, and TID fields of the FU payload header of the fragmentation units (FUs) and the NAL unit header information of the fragmented NAL unit may be transferred in the FuType field of the FU header of the fragmentation units (FUs). The FU payload shall not be empty. If a fragmentation unit (FU) is lost, the receiver shall discard all subsequent fragmentation units (FUs) in transmission order corresponding to the same fragmented NAL unit, unless the decoder of the receiver is known to be prepared to normally process incomplete NAL units. The receiver of an endpoint or MANE (Media-Aware Network Element) may aggregate the first n-1 fragments of the NAL unit into one (incomplete) NAL unit, even if the n-th fragment of the NAL unit is not received. In this case, forbidden_zero_bit of the corresponding NAL unit shall be set to 1 to indicate a syntax violation. Here, forbidden_zero_bit is 1-bit header information included in the NAL unit header, and may indicate whether there is a syntax violation (e.g., whether the last fragment of a fragmented NAL unit is missed, etc.).

Hereinafter, payload format parameters will be described in detail. The parameters may be optional parameters. For applications that use session description protocol (SDP), mapping between SDP and the parameters may be provided.

The receiver shall ignore parameters not specified in connection with media type registration.
- Type name: Video Subtype name: H.266
- Required parameters: none
- Optional parameters: profile-id, tier-flag, sub-profile-id, interop-constraints and level-id, the parameters may indicate the profile, tier, default level, sub-profile and some constraints of a bitstream carried by the RTP stream or a specific profile, tier, default level, sub-profile, and some constraints supported by the receiver. For reference, there may be 128 values of profile-id. The subset of coding tools identified by profile-id may be further constrained by a maximum of 255 instances of sub-profile-id. Additionally, 68 bits included in interop-constraints may be expanded to 324 bits, providing a means to further constrain tools from existing profiles. To support detailed signaling of coding tool subsets using profile-id, sub-profile-id and interop-constraints, unless recv-ols-id is included in the SDP response to select one of the provided layers, symmetrical use of the above-described parameters within the SDP provision/response may be required.

According to the existing semantics of the P-bit in the FU header, the fragmentation unit (FU) with the P-bit equal to 1 may be the last fragmentation unit (FU) of the last NAL unit of the coded picture, and the last NAL unit may be a VCL NAL unit or a non-VCL NAL unit.

However, the non-VCL NAL unit typically precedes the last VCL NAL unit within the coded picture. Specifically, according to video codec standards, such as H.266, the PH NAL unit shall precede the first VCL NAL unit within a picture unit (PU). Additionally, DCI, VPS, SPS, PPS, prefix SEI NAL units shall not to follow the last VCL NAL unit within a picture unit (PU). Additionally, the prefix APS NAL unit shall precede the first VCL NAL unit within a picture unit (PU). Accordingly, all non-VCL NAL units except for optional non-VCL NAL units (e.g., suffix APS NAL unit and suffix SEI NAL unit) precede the last VCL NAL unit within the coded picture. In this regard, the existing semantics of the P-bit, which does not constrain the type of the last NAL unit, has a problem in that it does not sufficiently reflect the properties of the coded picture.

Additionally, if the last fragmentation unit (FU) for the last NAL unit of the coded picture is dropped or not forwarded, the last fragmentation unit (FU) may be changed. In this case, in order to correctly extract the NAL unit from RTP packets, it is necessary to update other fragmentation units (FUs), including the P-bit. In particular, if the last fragmentation unit (FU) is for a non-VCL NAL unit (e.g., PH NAL unit), the update of fragmentation units (FUs) for the VCL NAL unit associated with the non-VCL NAL unit is necessary. However, the existing semantics of the P-bit do not clearly specify the update of the P-bit, which is problematic.

In order to solve the above-described problem, embodiments of the present disclosure can provide new semantics for the P-bit based on the following aspects. Depending on the embodiment, the following aspects may be implemented individually or in combination of two or more.

(Aspect 1): The P-bit in the FU header may be constrained to be equal to 1 only when the fragmentation unit (FU) includes a fragment of the VCL NAL unit.

(Aspect 2): If the P-bit in the FU header is equal to 1, it may specify that the fragmentation unit (FU) is followed by the RTP packet including a non-VCL NAL unit associated with the same coded picture.

(Aspect 3): Alternatively, the P-bit in the FU header may be equal to 1, regardless of whether the fragmentation unit (FU) includes a fragment of a VCL NAL unit or a non-VCL NAL unit.

(Aspect 4): As the case where the value of the P-bit in the FU header is 1 and the fragmentation unit (FU) includes a non-VCL NAL unit, if the fragmentation unit (FU) is dropped or is not forwarded to an RTP stream receiver, when the RTP packet including the NAL unit of the same picture unit preceding the fragmentation unit (FU) to be dropped is carried in the fragmentation units (FUs), the value of the P-bit in the last fragmentation unit (FU) of the NAL unit shall be updated to 1.

Hereinafter, embodiments of the present disclosure based on the above-described aspects will be described in detail.

### Embodiment 1

According to Embodiment 1 of the present disclosure, the P-bit of the FU header may be set to 1 for the last VCL NAL unit of the coded picture. The semantics of the FU header may be defined as follows based on Aspect 1 and Aspect 2 above.
- S: When it is set to 1, the S-bit indicates the start of the fragmented NAL unit. In other words, the first byte of the FU payload may be the first byte of the payload of the fragmented NAL unit. When the FU payload is not the start of the payload of the fragmented NAL unit, the S-bit shall be set to 0. In one example, the size of the S-bit field may be 1 bit.
- E: When it is set to 1, the E-bit indicates the end of the fragmented NAL unit. In other words, the last byte of the FU payload may be the last byte of the payload of the fragmented NAL unit. When the FU payload is not the last fragment of the payload of the fragmented NAL unit, the E-bit shall be set to 0. In one example, the size of the E-bit field may be 1 bit.
- P: When it is set to 1, the P-bit indicates the last VCL NAL unit of the coded picture. In other words, the last byte of the FU payload may be the last byte of the coded picture. When the FU payload is not the last fragment of the coded picture, the P-bit shall be set to 0 (that is, the P-bit may be set to 1 only for the last fragmentation unit (last VCL fragmentation unit) of the last NAL unit of the coded picture). In one example, the size of the P-bit field may be 1 bit.

When the P-bit is 1 in the FU header, the fragmentation unit (FU) may be followed by an RTP packet including a non-VCL NAL unit associated with the same coded picture. Therefore, after receiving a fragmentation unit (FU) having a P-bit equal to 1, the RTP stream receiver needs to check the presence of a fragmentation unit (FU) for additional non-VCL NAL units.
- FuType: The FuType field shall be the same as the field type of the fragmented NAL unit. In one example, the size of the FuType field may be 5 bits.
- DONL field: If present, it indicates the value of the 16 least significant bits of the decoding order number of the fragmented NAL unit.

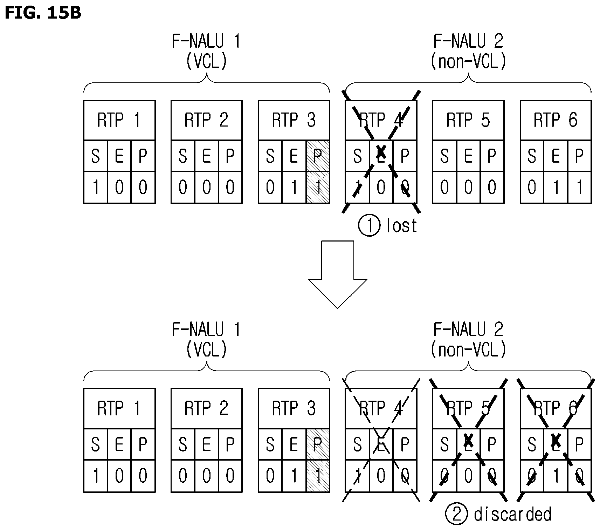

An example of a case where RTP packet loss occurs according to the semantics of the P-bit according to Embodiment 1 of the present disclosure is shown in FIGS. 15a and 15b.

FIGS. 15a and 15b are views illustrating cases where RTP packet loss occurs. In FIGS. 15a and 15b, it is assumed that i) the RTP stream includes 6 RTP packets RTP 1 to RTP 6, ii) RTP1 to RTP3 are for fragmented VCL NAL unit F-NALU1, and iii) RTP 4 to RTP 6 are for fragmented non-VCL NAL unit F-NALU2. In addition, it is assumed that six RTP packets belong to the same picture unit (PU).

Referring to FIGS. 15a and 15b, since RTP 1 is the first VCL fragmentation unit (FU) of F-NALU 1 (VCL), the S-bit of RTP 1 may be 1, the E-bit may be 0, and the P-bit may be 0. In addition, since RTP 2 is the second VCL fragmentation unit (FU) of the F-NALU 1 (VCL), the S-bit of RTP 2 may be 0, the E-bit may be 0 and the P-bit may be 0. In addition, since RTP 3 is the last VCL fragmentation unit (FU) of F-NALU 1 (VCL) which is the last VCL fragmentation unit (FU) of the coded picture, the S-bit of the RTP 3 may be 0, the E-bit may be 1, and the P-bit may be 1 according to Embodiment 1 of the present disclosure.

Since RTP 4 is the first non-VCL fragmentation unit (FU) of F-NALU 2 (Non-VCL), the S-bit of RTP 4 may be 1, the E-bit may be 0, and the P-bit may be 0. In addition, since RTP 5 is the second non-VCL fragmentation unit (FU) of F-NALU 2 (Non-VCL), the S-bit of RTP 5 may be 0, the E-bit may be 0, and the P-bit may be 0. In addition, since RTP 6 is the last fragmentation unit (FU) of F-NALU 2 (non-VCL) which is the last NAL unit of the coded picture but is not the last VCL fragmentation unit (FU), the S-bit of RTP 6 may be 0, the E-bit may be 1, and the P-bit may be 0 according to Embodiment 1 of the present disclosure.

In the example of FIG. 15a, when RTP 6 which is the last non-VCL fragmentation unit (FU) of F-NALU 2 (non-VCL) which is the last NAL unit of the coded picture is lost (①), the last fragmentation unit (FU) of the coded picture is changed from RTP 6 to RTP 5. In this case, according to the existing semantics of the P-bit, the P-bit of RTP 5 needs to be updated from 0 to 1. However, in the example of FIG. 15a to which Embodiment 1 of the present disclosure is applied, the last VCL fragmentation unit is maintained with RTP 3 and thus the update of the P-bit is unnecessary.

Next, in the example of FIG. 15b, if RTP 4 which is the first non-VCL fragmentation unit (FU) of F-NALU 2 (non-VCL) which is the last NAL unit of the coded picture is lost (①), both RTP 5 and RTP 6 following RTP 4 are discarded according to the RTP standard (②). However, in the example of FIG. 15a to which Embodiment 1 of the present disclosure is applied, the last VCL fragmentation unit is maintained with RTP 3 and thus the update of the P-bit is unnecessary.

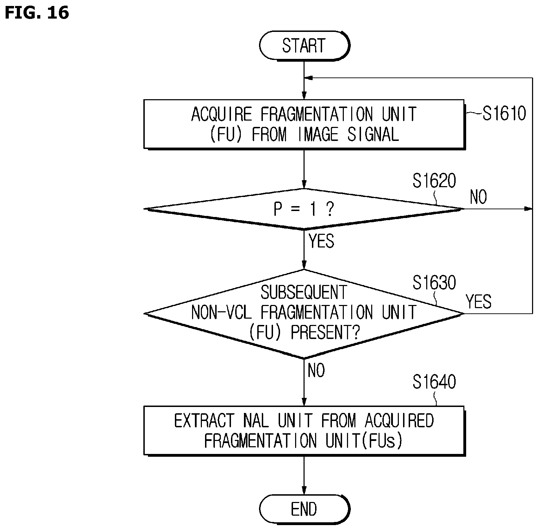

An example of a depacketization process of a fragmentation unit (FU) according to Embodiment 1 of the present disclosure is as shown in FIG. 16. Each step of FIG. 16 may be performed by the receiving apparatus 20 of FIG. 1.

Referring to FIG. 16, the receiving apparatus may acquire a fragmentation unit (FU) from an image signal received from the transmission apparatus (S1610). In addition, the receiving apparatus may determine whether the P-bit of the acquired fragmentation unit (FU) is 1 (S1620).

If the P-bit is 0 ('NO' of S1620), the receiving apparatus considers that the acquired fragmentation unit (FU) is not a last VCL fragmentation unit (FU) within a picture, and returns to step S1610 to additionally acquire the fragmentation unit (FU).

In contrast, if the P-bit is 1 ('YES' of S1620), the receiving apparatus considers that the VCL fragmentation unit (FU) is no longer present in the picture, and determines whether a subsequent non-VCL fragmentation unit (FU) is present in the picture (S1630).

Upon determining that the subsequent non-VCL fragmentation unit (FU) is present ('YES' of S1630), the receiving apparatus may return to step S1610 to additionally acquire the fragmentation unit (FU).

In contrast, upon determining that the subsequent non-VCL fragmentation unit (FU) is not present ('NO' of S1630), the receiving apparatus may extract NAL units from the fragmentation units (FUs) acquired through the above-described process.

On the other hand, although the checking of the P-bit (S1830) is shown as a repetition condition (or end condition) for acquiring the fragmentation unit (FU) (S1610) in FIG. 16, but it is only an example and the embodiments of the present disclosure are not limited thereto. For example, various repetition conditions other than the checking of the P-bit (S1830), such as checking of the total number of acquired fragmentation units (FUs), are applicable to the embodiments of the present disclosure.

According to Embodiment 1 of the present disclosure, the P-bit equal to 1 in the FU header may indicate the last fragmentation unit (FU) for the last VCL NAL unit of the coded picture. In this case, even if the fragmentation unit (FU) for the subsequent non-VCL NAL unit is dropped or is not forwarded, the receiving apparatus does not need to update other fragmentation units (FUs), especially the P-bit, in the same picture unit. Therefore, since the processing efficiency can be improved further because it is possible to prevent an increase in computation and complexity.

### Embodiment 2

According to Embodiment 2 of the present disclosure, when a fragmentation unit (FU) is lost, the P-bit of the FU header shall be updated. The semantics of the FU header may be defined as follows based on Aspect 3 and Aspect 4 above.
- S: When it is set to 1, the S-bit indicates the start of the fragmented NAL unit. In other words, the first byte of the FU payload may also be the first byte of the payload of the fragmented NAL unit. When the FU payload is not the start of the payload of the fragmented NAL unit, the S-bit shall be set to 0. In one example, the size of the S-bit field may be 1 bit.
- E: When it is set to 1, the E-bit indicates the end of the fragmented NAL unit. In other words, the last byte of the FU payload may be the last byte of the payload of the fragmented NAL unit. When the FU payload is not the last fragment of the payload of the fragmented NAL unit, the E-bit shall be set to 0. In one example, the size of the E-bit field may be 1 bit.
- P: When it is set to 1, the P-bit indicates the last VCL NAL unit of the coded picture. In other words, the last byte of the FU payload may be the last byte of the coded picture. When the FU payload is not the last fragment of the coded picture, the P-bit shall be set to 0. In one example, the size of the P-bit field may be 1 bit.

In a case where the P-bit is 1 in the FU header and the fragmentation unit (FU) includes a non-VCL NAL unit, when the fragmentation unit (FU) is dropped or is not forwarded to an RTP stream receiver, if the RTP packet including the NAL unit of the same picture unit preceding the fragmentation unit (FU) to be dropped is carried in the fragmentation units (FUs), the value of the P-bit in the last fragmentation unit (FU) of the NAL unit shall be updated to 1 (constraints).
- FuType: The FuType field shall be the same as the field type of the fragmented NAL unit. In one example, the size of the FuType field may be 5 bits.
- DONL field: If present, it indicates the value of the 16 least significant bits of the decoding order number of the fragmented NAL unit.

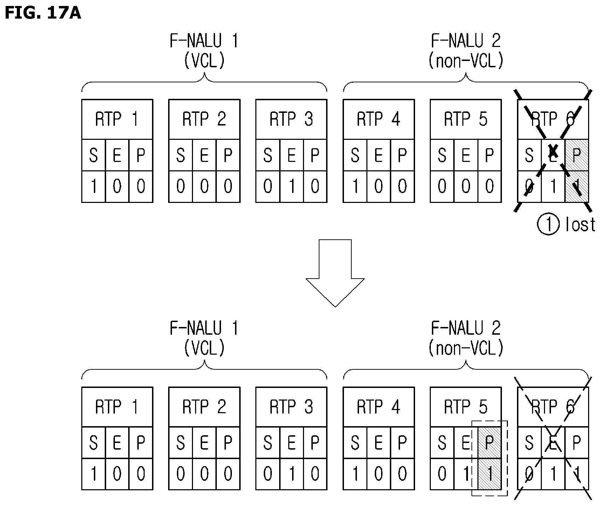

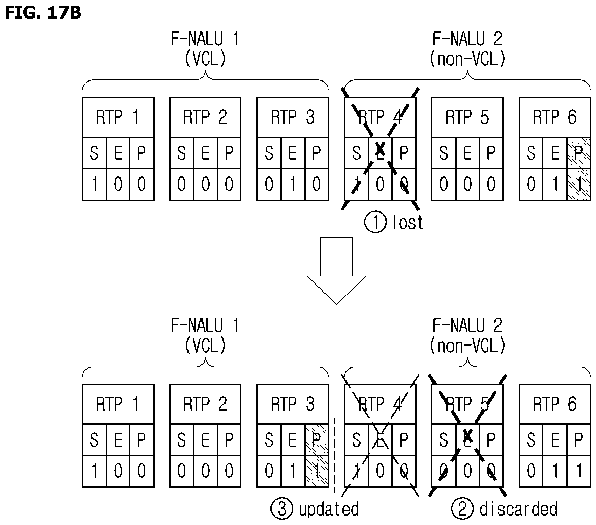

An example of a case where RTP packet loss occurs according to the semantics of the P-bit according to Embodiment 2 of the present disclosure is shown in FIGS. 17a and 17b.

FIGS. 17a and 17b are views illustrating cases where RTP packet loss occurs. In FIGS. 17a and 17b, it is assumed that i) the RTP stream includes 6 RTP packets RTP 1 to RTP 6, ii) RTP1 to RTP3 are for fragmented VCL NAL unit F-NALU1, and iii) RTP 4 to RTP 6 are for fragmented non-VCL NAL unit F-NALU2. In addition, it is assumed that six RTP packets belong to the same picture unit (PU).

Referring to FIGS. 17a and 17b, since RTP 1 is the first VCL fragmentation unit (FU) of F-NALU 1 (VCL), the S-bit of RTP 1 may be 1, the E-bit may be 0, and the P-bit may be 0. In addition, since RTP 2 is the second VCL fragmentation unit (FU) of the F-NALU 1 (VCL), the S-bit of RTP 2 may be 0, the E-bit may be 0 and the P-bit may be 0. In addition, since RTP 3 is the last VCL fragmentation unit (FU) of F-NALU 1 (VCL) but is not the last fragmentation unit (FU) of the coded picture, the S-bit of the RTP 3 may be 0, the E-bit may be 1, and the P-bit may be 0 according to Embodiment 2 of the present disclosure.

Since RTP 4 is the first non-VCL fragmentation unit (FU) of F-NALU 2 (Non-VCL), the S-bit of RTP 4 may be 1, the E-bit may be 0, and the P-bit may be 0. In addition, since RTP 5 is the second non-VCL fragmentation unit (FU) of F-NALU 2 (Non-VCL), the S-bit of RTP 5 may be 0, the E-bit may be 0, and the P-bit may be 0. In addition, since RTP 6 is the last fragmentation unit (FU) of F-NALU 2 (non-VCL) which is the last NAL unit of the coded picture, the S-bit of RTP 6 may be 0, the E-bit may be 1, and the P-bit may be 0 according to Embodiment 1 of the present disclosure.

In the example of FIG. 17a, when RTP 6 which is the last fragmentation unit (FU) of F-NALU 2 (non-VCL) which is the last NAL unit of the coded picture is lost (①), the last fragmentation unit (FU) of the coded picture is changed from RTP 6 to RTP 5. Accordingly, the P-bit of RTP 5 may be updated to 1 according to Embodiment 2 of the present disclosure.

Next, in the example of FIG. 17b, if RTP 4 which is the first non-VCL fragmentation unit (FU) of F-NALU 2 (non-VCL) which is the last NAL unit of the coded picture is lost (①), both RTP 5 and RTP 6 following RTP 4 are discarded according to the RTP standard (①). Therefore, the last fragmentation unit (FU) of the coded picture is changed from RTP 6 to RTP 3. Accordingly, the P-bit of RTP 3 may be updated to 1 according to Embodiment 2 of the present disclosure (①).

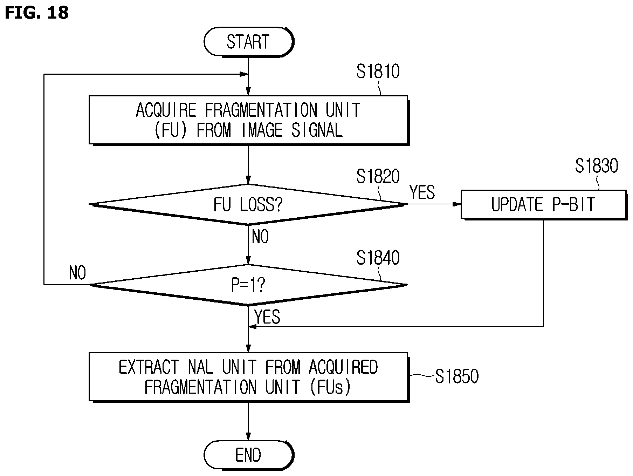

An example of a depacketization process of a fragmentation unit (FU) of a fragmentation unit (FU) according to Embodiment 2 of the present disclosure is as shown in FIG. 18. Each step of FIG. 18 may be performed by the receiving apparatus 20 of FIG. 1.

Referring to FIG. 18, the receiving apparatus may acquire a fragmentation unit (FU) from an image signal received from the transmission apparatus (S1810). In addition, the receiving apparatus may determine whether loss of the fragmentation unit (FU) (i.e., RTP packet loss) has occurred (S1820). In one embodiment, whether loss of the fragmentation unit (FU) has occurred may be determined based on the sequence number of the fragmentation unit (FU). This is because the sequence number of the fragmentation unit (FU) is set consecutively according to the transmission order. Specifically, if a difference between the sequence number of the current fragmentation unit (FU) and the sequence number of the immediately previously acquired fragmentation unit (FU) is 1, the receiving apparatus may determine that no loss of the fragmentation unit (FU) has occurred. In contrast, if the difference between the sequence number of the current fragmentation unit (FU) and the sequence number of the immediately previously obtained fragmentation unit (FU) is greater than 1, the receiving apparatus may determine that loss of the fragmentation unit (FU) has occurred. Meanwhile, the sequence number is included in the RTP header as described above with reference to FIG. 8.

When loss of the fragmentation unit (FU) has occurred ('YES' of S1820), the receiving apparatus discards all fragmentation units (FUs) after the fragmentation unit (FU) in which the loss has occurred in the same picture, and the P-bit of the fragmentation unit (FU) immediately before the fragmentation unit (FU) in which the loss has occurred may be updated to 1 (S1830).

In contrast, if no loss of the fragmentation unit (FU) has occurred ('NO' in S1820), the receiving apparatus may determine whether the P-bit of the acquired fragmentation unit (FU) is 1 (S1840).

When the P-bit is 0 ('NO' of S1840), the receiving apparatus considers that the acquired fragmentation unit (FU) is not the last fragmentation unit (FU) within the picture, and returns to step S1810 to additionally acquire the fragmentation unit (FU).

In contrast, when the P-bit is 1 ('YES' of S1840), the receiving apparatus may consider that the VCL fragmentation unit (FU) is no longer present in the picture, and extract NAL units from the fragmentation units (FUs) acquired through the above-described process (S1850).

Meanwhile, FIG. 18 shows that the checking of FU loss (S1820) and the checking of the P-bit (S1830) are performed sequentially, but this is only an example and the embodiments of the present disclosure are not limited thereto. For example, step S1830 may be performed simultaneously with step S1820 or before step S1820. In addition, in FIG. 18, the checking of the P-bit (S1830) is shown as a repetition condition (or end condition) of the fragmentation unit (FU) acquisition (S1810), but this is also only an example and thus the embodiments of the present disclosure are limited thereto. For example, various repetition conditions other than the checking of the P-bit (S1830), such as checking of the total number of acquired fragmentation units (FUs), etc., are applicable to the embodiments of the present disclosure.

According to Embodiment 2 of the present disclosure, the P-bit equal to 1 in the FU header may indicate the last fragmentation unit (FU) for the last NAL unit of the coded picture. In addition, if the fragmentation unit (FU) of the coded picture is dropped or is not forwarded (i.e., lost), the P-bit of the fragmentation unit (FU) immediately before the lost fragmentation unit (FU) may be updated to 1. Accordingly, since the P-bit may indicate the last valid NAL unit of the coded picture, the receiving apparatus may correctly extract the fragmented NAL units. Furthermore, because the fragmented NAL units may be correctly extracted, it is possible to prevent an increase in computation and complexity that may occur due to lost packet recovery, etc.

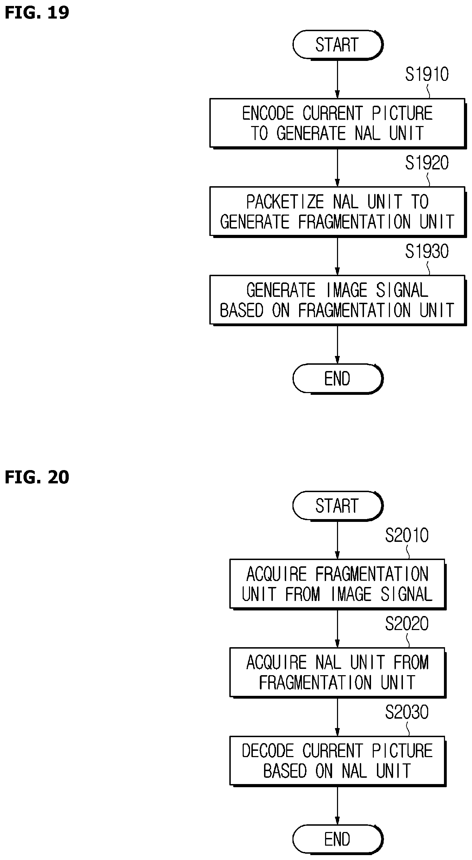

Hereinafter, an image signal processing method according to an embodiment of the present disclosure will be described in detail with reference to FIGS. 19 and 20.

FIG. 19 is a flowchart showing a method of processing an image signal by a transmission apparatus according to an embodiment of the present disclosure. The image signal processing method of FIG. 19 may be performed by the transmission apparatus 10 of FIG. 1.

Referring to FIG. 19, the transmission apparatus may encode a current picture and generate one or more NAL units (S1910).

The transmission apparatus may packetize the generated NAL unit and generate one or more fragmentation units for the current picture (S1920). The fragmentation unit may include first header information (e.g., P-bit of the FU header) indicating whether the fragmentation unit is for the last VCL (video coding layer) NAL unit of the current picture. At this time, based on the generated fragmentation unit including a byte preceding the last byte of the last VCL NAL unit, the first header information of the generated fragmentation unit may have a first value (e.g., 0). Additionally, based on the generated fragmentation unit including the last byte of the last VCL NAL unit, the first header information of the generated fragmentation unit may have a second value (e.g., 1).

In addition, the transmission apparatus may generate an image signal for the current picture based on the generated fragmentation unit (S1930).

In one embodiment, the current picture may include at least one non-VCL unit following the last VCL NAL unit.

In one embodiment, based on the generated fragmentation unit including the byte of the non-VCL NAL unit, the first header information of the generated fragmentation unit may have the first value.

In one embodiment, based on the generated fragmentation unit including the byte of the non-VCL NAL unit, the first header information (e.g., P-bit of the FU header) of the generated fragmentation unit may have the first value ( e.g., 0).

In one embodiment, the first header information (e.g., P-bit of the FU header) may be kept constant for all fragmentation units for the current picture, regardless of whether the fragmentation unit for the non-VCL NAL unit is lost.

In one embodiment, based on at least one fragmentation unit of the NAL unit for the current picture being lost, all fragmentation units following the lost fragmentation unit may be removed from the NAL unit.

FIG. 20 is a flowchart showing a method of processing an image signal by a receiving apparatus according to an embodiment of the present disclosure. The image signal processing method of FIG. 20 may be performed by the receiving apparatus 20 of FIG. 1.

Referring to FIG. 20, the receiving apparatus may acquire one or more fragmentation units from the image signal (S2010).

The receiving apparatus may extract one or more bytes of the NAL (network abstraction layer) unit for the current picture from the acquired fragmentation unit (S2020). The fragmentation unit may include first header information (e.g., P-bit of the FU header) indicating whether the fragmentation unit includes the last byte of the last VCL (video coding layer) NAL unit of the current picture. At this time, based on the acquired fragmentation unit including a byte preceding the last byte of the last VCL NAL unit, the first header information of the acquired fragmentation unit may have a first value (e.g., 0). Additionally, based on the acquired fragmentation unit including the last byte of the last VCL NAL unit, the first header information of the acquired fragmentation unit may have a second value (e.g., 1).

In addition, the receiving apparatus may decode the current picture based on the extracted NAL unit (S2030).

In one embodiment, the current picture may include at least one non-VCL NAL unit following the last VCL NAL unit.

In one embodiment, based on the acquired fragmentation unit including the byte of the non-VCL NAL unit, the first header information of the acquired fragmentation unit may have the first value.

In one embodiment, based on the acquired fragmentation unit including the byte of the non-VCL NAL unit, the first header information (e.g., P-bit of the FU header) of the acquired fragmentation unit may have the first value ( e.g., 0).

In one embodiment, the first header information (e.g., P-bit of the FU header) may be kept constant for all fragmentation units for the current picture, regardless of whether the fragmentation unit for the non-VCL NAL unit is lost.

In one embodiment, based on at least one fragmentation unit of the NAL unit for the current picture being lost, all fragmentation units following the lost fragmentation unit may be removed from the NAL unit.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Various embodiments of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

In addition, the image decoding apparatus and the image encoding apparatus, to which the embodiments of the present disclosure are applied, may be included in a multimedia broadcasting transmission and receiving device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, a video telephony video device, a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

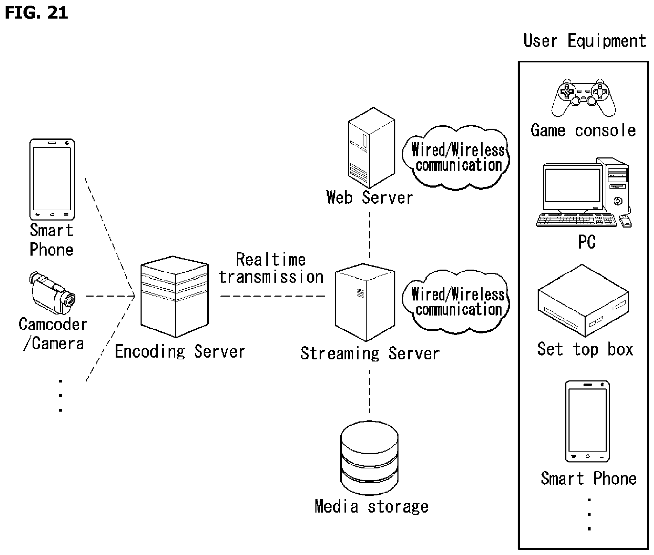

FIG. 21 is a view showing a content streaming system, to which an embodiment of the present disclosure is applicable.

As shown in FIG. 21, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

### Industrial Applicability

The embodiments of the present disclosure may be used to process an image signal.

## Claims

1. An image signal processing method performed by a receiving apparatus, the image signal processing method comprising:
acquiring one or more fragmentation units from an image signal;
extracting one or more bytes of a network abstraction layer (NAL) unit for a current picture from the acquired fragmentation unit; and
decoding the current picture based on the extracted NAL unit,
wherein the fragmentation unit comprises first header information indicating whether the fragmentation unit includes a last byte of a last video coding layer (VCL) NAL unit of the current block,
wherein first header information of the acquired fragmentation unit has a first value, based on the acquired fragmentation unit including a byte preceding the last byte of the last VCL NAL unit, and
wherein the first header information of the acquired fragmentation unit has a second value, based on the acquired fragmentation unit including the last byte of the last VCL NAL unit.

2. The image signal processing method of claim 1, wherein the current picture further comprises at least one non-VCL NAL unit following the last VCL NAL unit.

3. The image signal processing method of claim 2, wherein the first header information of the acquired fragmentation unit has the first value, based on the acquired fragmentation unit including a byte of the non-VCL NAL unit.

4. The image signal processing method of claim 2, wherein the first header information is kept constant for all fragmentation units for the current picture, regardless of whether a fragmentation unit for the non-VCL NAL unit is lost.

5. The image signal processing method of claim 1, wherein all fragmentation units following the lost fragmentation unit are removed from the NAL unit, based on at least one fragmentation unit of the NAL unit for the current picture being lost.

6. An image signal processing method performed by a transmission apparatus, the image signal processing method comprising:
encoding a current picture to generate a network abstraction layer (NAL) unit;
packetizing the generated NAL unit to generate one or more fragmentation units for the current picture; and
generating an image signal for the current picture based on the generated fragmentation unit,
wherein the fragmentation unit comprises first header information indicating whether the fragmentation unit includes a last byte of a last video coding layer (VCL) NAL unit of the current block,
wherein first header information of the generated fragmentation unit has a first value, based on the generated fragmentation unit including a byte preceding the last byte of the last VCL NAL unit, and
wherein the first header information of the generated fragmentation unit has a second value, based on the generated fragmentation unit including the last byte of the last VCL NAL unit.

7. The image signal processing method of claim 6, wherein the current picture further comprises at least one non-VCL NAL unit following the last VCL NAL unit.

8. The image signal processing method of claim 7, wherein the first header information of the generated fragmentation unit has the first value, based on the generated fragmentation unit including a byte of the non-VCL NAL unit.

9. The image signal processing method of claim 7, wherein the first header information is kept constant for all fragmentation units for the current picture, regardless of whether a fragmentation unit for the non-VCL NAL unit is lost.

10. The image signal processing method of claim 6, wherein all fragmentation units following the lost fragmentation unit are removed from the NAL unit, based on at least one fragmentation unit of the NAL unit for the current picture being lost.

11. A receiving apparatus for processing an image signal, the receiving apparatus comprising:
a receiving unit configured to receive an image signal;
a depacketization unit configured to extract one or more bytes of a network abstraction layer (NAL) unit for a current picture from one or more fragmentation units included in the image signal; and
a decoding unit configured to decode the current picture based on the extracted NAL unit,
wherein the fragmentation unit comprises first header information indicating whether the fragmentation unit includes a last byte of a last video coding layer (VCL) NAL unit of the current block,
wherein first header information of the acquired fragmentation unit has a first value, based on the acquired fragmentation unit including a byte preceding the last byte of the last VCL NAL unit, and
wherein the first header information of the acquired fragmentation unit has a second value, based on the acquired fragmentation unit including the last byte of the last VCL NAL unit.

12. The receiving apparatus of claim 11, wherein the current picture further comprises at least one non-VCL NAL unit following the last VCL NAL unit.

13. The receiving apparatus of claim 12, wherein the first header information of the acquired fragmentation unit has the first value, based on the acquired fragmentation unit including a byte of the non-VCL NAL unit.

14. The receiving apparatus of claim 12, wherein the first header information is kept constant for all fragmentation units for the current picture, regardless of whether a fragmentation unit for the non-VCL NAL unit is lost.

15. The receiving apparatus of claim 11, wherein all fragmentation units following the lost fragmentation unit are removed from the NAL unit, based on at least one fragmentation unit of the NAL unit for the current picture being lost.
